# EUROPEAN PATENT SPECIFICATION

(11) **EP 0 431 356 B1**
(45) Date of publication and mention of the grant of the patent: **26.10.1994**
(21) Application number: 90121730.7
(22) Date of filing: 13.11.1990
(51) Int. Cl.: F16C 1/24

(54) **Flexible shaft**
Biegsame Welle
Arbre flexible

(30) Priority: 06.12.1989 JP 317037/89
(43) Date of publication of application: 12.06.1991
(73) Proprietor: TAISEI KOHZAI KABUSHIKI KAISHA, Higashiosaka-shi, Osaka-fu (JP)
(72) Inventor: Ishikawa, Yoshiaki, Ashiya-shi, Hyogo-ken (JP)
(74) Representative: Flügel, Otto, Dipl.-Ing.

(56) References cited:
- DE-A- 2 000 281
- DE-B- 1 111 464
- DE-B- 1 213 677
- US-A- 2 573 361
- PATENT ABSTRACTS OF JAPAN, vol. 9, no. 103 (M-377)[1826], 8th May 1985;& JP-A-59 226 709 (NISSAN JIDOSHA) 19-12-1984

## Description

This invention relates to a flexible shaft which transmits a torque under its freely bent condition as defined in the prior art portion of claim 1.

A flexible shaft is generally used for various purposes such as, for example, in a portable mowing machine and industrial machines etc.

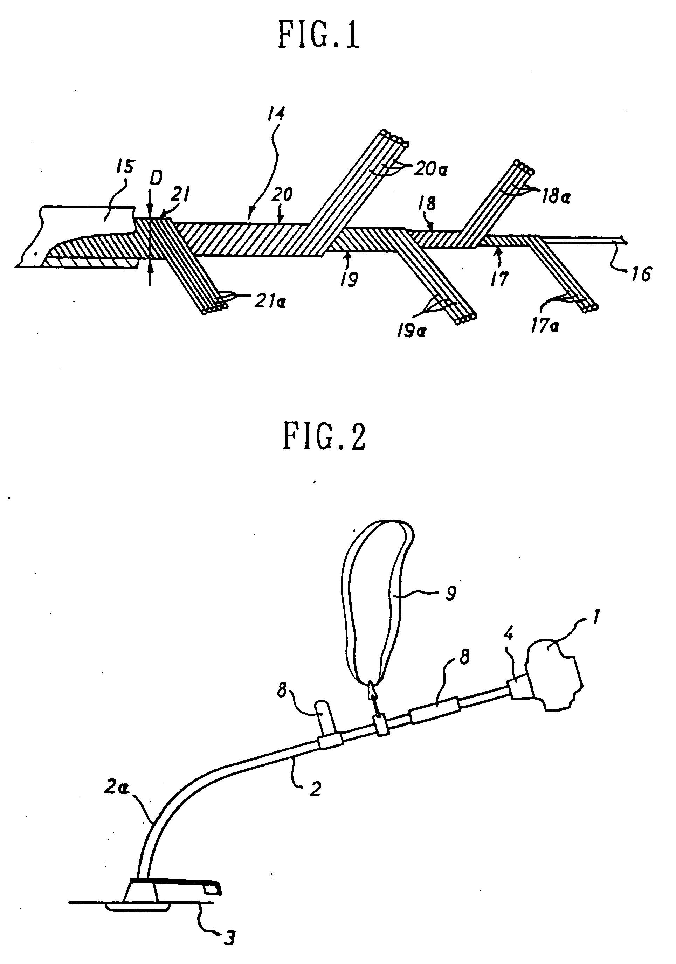

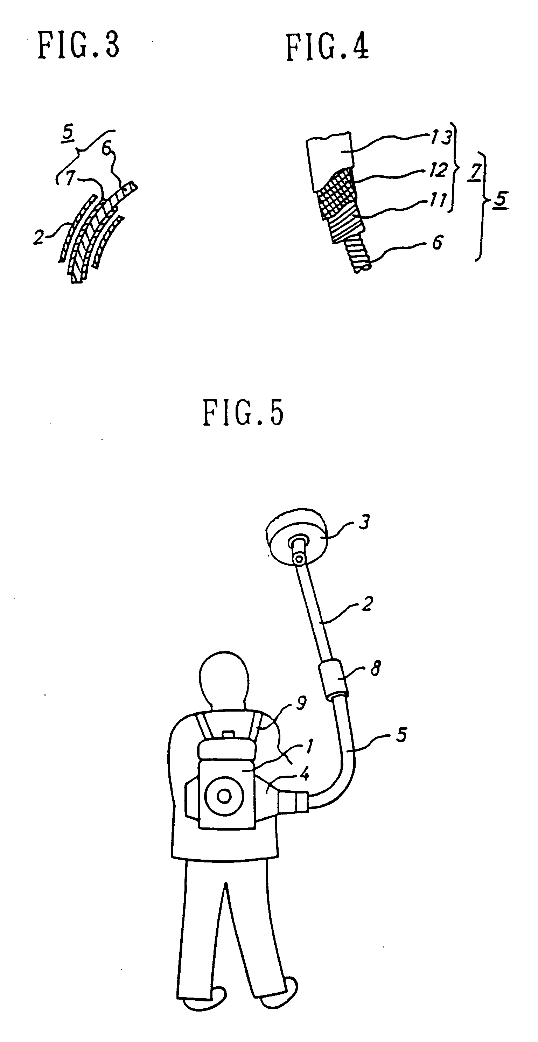

In a general shoulder type mowing machine, an end of pipe 2 is fixed to an engine 1 as illustrated by Fig. 2. A cutter blade 3 is supported at the other end of the pipe 2. Two grips 8 for an operator to hold the mowing machine and a band 9 to be carried on an operator's shoulder are secured onto the outer periphery of the pipe 2. A flexible shaft 5 is inserted in and through the pipe 2 as illustrated by Fig. 3. The flexible shaft 5 is composed of an inner shaft 6 and a liner tube 7 which covers an outer periphery of the inner shaft 6. The inner shaft 6 is connected to an output shaft (not shown) of the engine 1 at its one end and connected to the cutter blade 3 at its other end. Both ends of the liner tube 7 are secured firmly so that they do not rotate together with the inner shaft 6. Accordingly, a torque of the output shaft of the engine 1 is transmitted to the cutter blade 3 through a clutch 4 and the inner shaft 6 of the flexible shaft 5. The liner tube 7 is so manufactured that an outer periphery of a spiral tube 11, which is formed of closely wound element wires made of steel, is covered by a braid 12 and an outer periphery of the braid 12 is covered by a coating 13 consisting of rubber and vinyl etc. as illustrated by Fig. 4. The coating 13 may be formed of an extruded liner made of synthetic resin.

In a back type mowing machine, the pipe 2 is installed only between the grip 8 and the cutter blade 3, and the flexible shaft 5 is exposed in a range between the engine 1 and the grip 8, as illustrated in Fig. 5. Consequently, the flexible shaft can be bent freely within the range between the engine 1 and the grip 8.

Generally, the inner shaft 6 is so manufactured that element wire groups, which are formed by closely adhering plural steel element wires into band shapes, are wound around a steel core wire by turns in reverse directions and plural layers of element wire groups having concentric sections are formed thereon. In assembling the flexible shaft 5, grease of about 10 grams for example is filled into the liner tube 7 as lubricant; and the inner shaft 6, an outer periphery of which is covered with grease of about 10 grams for example, is inserted into the liner tube 7. In carrying out mowing work, the inner shaft 6 rotates in the fixed liner tube 7 at a rotation speed of about 7,000 to 8,000 rpm. However, since the other end 2a of the pipe 2 is bent downward so that the cutter blade 3 is positioned approximately parallel to the ground surface under a condition where the operator holds the pipe 2, heat generation of the flexible shaft 5 increases in the other end 2a and grease deteriorates. For this reason, it has been required for users to take out the inner shaft 6 from the liner tube 7 after every 50 operation hours for example, remove old grease, and insert the inner shaft 6 into the liner tube 7 while applying new grease onto the outer periphery of the inner shaft 6. Further, the flexible shaft 5 has an included defect in durability because its wear and tear has been inevitable due to wear of the inner shaft 6 notwithstanding that the grease has been exchanged periodically.

DE-BE-1 111 464 discloses a flexible shaft equiped with an inner shaft, in which element wire groups formed by closely adhearing plural steel element wires into band shapes are wound around a steel core wire by turns in reverse direction and the plural layers of element wire groups having concentric sections are formed thereon.

Furthermore, the DE-A-2 000 281 discloses a flexible shaft equiped with an inner cable made of element wires for transferring motion in a curved path in which lubricant is impregnated in clearances between said element wires in order to reduce corrosion and wear of the wires. Both of the before mentioned cables are shafts which have to be protected against external influence in order to reduce friction, corrosion and wear of the wires. The flexible shaft according to DE-A-2 000 281 is designed to transfer linear movement and the lubricant filled or impregnated in the clearances between its wires are never subject to centrifugal forces.

Especially in the back type mowing machine of Fig. 5, the above-mentioned trouble becomes remarkable because the exposed part of the flexible shaft 5 is bent repeatedly and frequently.

The inventor of this invention repeated experiments fixing his attention upon the mechanism of heat generation in the flexible shaft, and found that friction between element wires in the inner shaft and inside friction due to repeated bending of element wires themselves occupied a principal part of the cause of heat generation. Namely, as compared with a heating value caused by friction between the inner shaft and the liner tube, a heating value generated in the inner shaft was very large to reach approximately 90% of the total heating value. Incidentally, it was ensured that the inner shaft deformed itself in the liner tube naturally into a non-contacting position for producing less friction and this was a cause of minimized friction between the liner tube and inner shaft. So long as the heating value of the inner shaft inside amounts to a major portion of the total heating value, it can not be expected that grease can be supplied to the inner shaft inside partially due to a function of centrifugal force, even if a large quantity of grease is applied onto the surface of inner shaft. Therefore, the above-mentioned disadvantage can not be avoided.

The present invention was made by fixing the attention upon the fact that, as mentioned above, the heat generation of the flexible shaft inside is caused by the friction between the element wires composing the inner shaft and the inside friction of element wires themselves. An object of this invention is to provide a flexible shaft which enables effective lubrication and cooling of the inner shaft inside to improve its durability as a result, and can save manpower for reapplying lubricants such as grease etc.

In order to accomplish the above-mentioned object, this invention comprises the features of the characterizing portion of claim 1 and provides a flexible shaft equipped with an inner shaft, in which element wire groups formed by closely adhering plural steel element wires into band shapes are wound around a steel core wire by turns in reverse directions and the plural layers of element wire groups having concentric cross-section are formed thereon; wherein lubricant is impregnated into clearances between the element wires.

By impregnating the lubricant into clearances between element wires, wear due to friction between the element wires is reduced to a minimum and the heat generation is also controlled when the flexible shaft transmits a torque under bent condition. Accordingly, the durability can be improved and manpower for reapplying the lubricant can be saved.

By impregnating the lubricant by means of a vacuum impregnation system, the lubricant can be impregnated successfully into clearances between the element wires.

By impregnating the lubricant at a temperature higher than a normal service temperature of the flexible shaft, much more lubricant can be impregnated into clearances between the element wires and the impregnated lubricant can preferably be controlled from oozing caused by the centrifugal force.

By providing at least one grease-bearing layer in between the core wire and element wire group or between the element wire groups, the lubricant impregnated in the grease-bearing layer can ooze gradually by the centrifugal force so that lubricating and cooling effects can be maintained for a longer period.

### Brief Description of the Drawings

Fig. 1 is a structural explanatory view of a flexible shaft in an embodiment of this invention.

Fig. 2 is a schematic structural view of a shoulder type mowing machine using a conventional flexible shaft.

Fig. 3 is an enlarged sectional view of an essential part in a state where the conventional flexible shaft is inserted into a pipe.

Fig. 4 is a structural explanatory view of a liner tube for use in a conventional flexible shaft.

Fig. 5 is a schematic composition view under servicing condition of the back type mowing machine using the conventional flexible shaft.

### Detailed Description of the Invention

### (Embodiment)

A flexible shaft is composed of an inner shaft 14 and a liner tube 15 covering the inner shaft 14. The liner tube 15 has the same structure as a conventional liner tube 7. The inner shaft 14 is so constructed that plural hemp yarns 17a closely adhered into a band shape are wound around an outer periphery of a steel core wire 16 having a circular section to form a grease-bearing layer, and element wire groups 18, 19, 20 and 21 which are formed by adhering plural steel element wires 18a, 19a, 20a and 21a into band shapes are wound around the grease-bearing layer 17 by turns in reverse directions so as to attain a specified outside diameter D. Namely, the element wire group 19 is wound around an outer periphery of the the element wire group 18, the element wire group 20 is wound around an outer periphery of the the element wire group 19, the element wire group 21 is wound around an outer periphery of the the element wire group 20, and the element wire groups 18, 19, 20 and 21 form fourfold layers having a concentric cross-section. The grease-bearing layer 17 and the element wire groups 19 and 21 are wound in reverse directions to the element wire groups 18 and 20.

When the inner shaft 14 is manufactured, the core wire 16, the grease-bearing layer 17 and the element wire groups 18, 19, 20 and 21 are assembled into the above-mentioned structure and put in a vacuum impregnation device. The product thus assembled is impregnated in lubricant such as grease etc. which has been heated to a temperature (120°C, for example) a little higher than a normal service temperature (85 to 100°C, for example) under vacuum condition, and is then released from the vacuum condition. The atmospheric pressure thus thrusts the lubricant, which has an increased flowing property due to the raised temperature, forcedly in clearances between the element wires 18a, 19a, 20a, 21a, the hemp yarn 17a and the core wire 16, so that the lubricant is impregnated into inside clearances by means of a so-called vacuum impregnation system. The lubricant penetrates into the hemp yarn 17a to form the grease-bearing layer 17. The inner shaft 14 thus impregnated with lubricant is inserted into the liner tube 15 as it is, without filling lubricant into the liner tube 15 and without applying the lubricant onto the outer periphery of the inner shaft 14. Incidentally, specific gravities of the element wires 18a, 19a, 20a and 21a made of steel wires are 7.8 g/cm³, while that of the inner shaft 14 which has not been impregnated with lubricant yet is 6.8 g/cm³ or smaller. Lubricant of 20 grams has conventionally been consumed for filling in the liner tube 7 and applying onto the outer periphery of the inner shaft 6, but the weight of lubricant impregnated in the inner shaft 14 by the above-mentioned method is about a half or a third of the conventional weight.

The flexible shaft thus obtained was put in service at a service temperature of 85 to 100°C, and no seizure was found even after 100 operation hours.

Since the lubricant such as grease etc. is impregnated in clearances between the element wires 18a, 19a, 20a and 21a of the inner shaft as described above, the wear due to friction between the element wires 18a, 19a, 20a and 21a is reduced to a minimum by the impregnated lubricant and heat generation is also controlled, when the flexible shaft transmits the torque in bent condition. Further, the lubricant impregnated into the hemp yarn 17a of the grease-bearing layer 17 gradually oozes by the centrifugal force in between the element wires 18a, 19a, 20a and 21a of the element wire groups 18, 19, 20 and 21 which are located radially outwards of the grease-bearing layer 17, so that the lubricant maintains its lubricating function for a long period. Moreover, since the element wires 18a, 19a, 20a and 21a are wound firmly in closely adhered condition, the quantity of lubricant thrown away by the centrifugal force is small from the lubricant oozed in between the element wires 18a, 19a, 20a and 21a, so that the lubricant is held in the inner shaft 14 for a long period to perform the lubricating and cooling functions. Especially, the lubricant is subjected to vacuum impregnation at a temperature higher than the normal service temperature, so that a large quantity of the lubricant can be impregnated due to its decrease in viscosity at the time of impregnation. However, the viscosity of lubricant is large at the time of operation so that the quantity of lubricant oozing out of the inner shaft 14 is small even when centrifugal force is applied to the shaft.

The grease-bearing layer 17 is composed of the hemp yarn 17a in the above-mentioned embodiment, but a glass fiber rope etc. may be used instead of the hemp yarn 17a.

The grease-bearing layer 17 is installed between the core wire 16 and the most inside element wire group 18 in the above-mentioned embodiment. However, the grease-bearing layer 17 may be installed between the element wire groups 18 and 19, or between the element wire groups 19 and 20, or between the element wire groups 20 and 21. Further, it may be installed in two or more of the places mentioned above.

In case when the transmission torque of the flexible shaft is to be increased, it is enough to increase quantities of the element wires 18a, 19a, 20a and 21a of the element wire groups 18, 19, 20 and 21.

It goes without saying that the flexible shaft of this invention can be used for purposes other than the mowing machine.

According to the present invention as described above, since the lubricant is impregnated in clearances between the element wires of inner shaft, the wear due to friction between the element wires can be reduced to a minimum by the impregnated lubricant and heat generation can also be controlled, when the flexible shaft transmits the torque in bent condition. Accordingly, the durability of the flexible shaft can be improved and manpower for reapplying the lubricant can be saved.

## Claims

1. A flexible shaft comprising:
an inner shaft having a steel core wire (16) and element wire groups (18,19,20,21) which are formed by closely adhering a plurality of steel element wires (18a,19a,20a,21a) into band shapes wound around the steel core wire (16) by turns in reverse directions relative to each other, and the plurality of wire groups (18,19,20,21) being formed in layers and in concentric cross-section,
**characterized in**
that a lubricant is vacuum-impregnated into clearances between the plurality of steel element wires (18a,19a,20a,21a) whereby said lubricant substantially surrounds the periphery of said steel core wire (16) and each of the inner ones of said plurality of steel element wires (18a,19a,20a,21a) and said lubricant substantially fills up the spaces between said steel element wires (18a,19a,20a,21a).

2. A flexible shaft as set forth in claim 1, characterized in that at least one grease-bearing layer (17) is installed between the core wire (16) and the most inside element wire group (18) or between the element wire groups (18,19,20,21).

3. A flexible shaft as set forth in claim 2, characterized in that the grease-bearing layer (17) is formed by winding plural hemp yarns around the core wire (16) under the conditions that the hemp yarns are closely adhesively formed into a band shape.

## Patentansprüche

1. Biegsame Welle, umfassend eine innere Welle mit einem Stahlkerndraht (16) und mit Drahtelementgruppen (18,19,20,21), die gebildet werden durch dichtes Aneinanderfügen einer Vielzahl von Stahldrahtelementen (18a,19a,20a,21a) zu Bandformen, die in zueinander gegenläufigen Windungen um den Stahlkerndraht (16) herumgewickelt sind, wobei die Vielzahl von Drahtgruppen (18,19.20,21) in Schichten und mit konzentrischem Querschnitt gebildet ist, dadurch gekennzeichnet,
daß Zwischenräume zwischen der Vielzahl von Stahldrahtelementen (18a,19a,20a,21a) unter Vakuum mit einem Schmiermittel imprägniert sind, wodurch das Schmiermittel im wesentlichen die Peripherie des Stahlkerndrahts (16) und jedes der inneren der Vielzahl von Stahldrahtelementen (18a,19a,20a,21a) umgibt und im wesentlichen die Zwischenräume zwischen den Stahldrahtelementen (18a,19a,20a,21a) füllt.

2. Biegsame Welle nach Anspruch 1, dadurch gekennzeichnet, daß zumindest eine ein Schmierfett tragende Schicht (17) zwischen dem Kerndraht (16) und der innersten Drahtelementgruppe (18) oder zwischen den Drahtelementgruppen (18,19,20,21) eingebracht ist.

3. Biegsame Welle nach Anspruch 2, dadurch gekennzeichnet, daß die ein Schmierfett tragende Schicht (17) gebildet wird durch Umwickeln des Kerndrahts mit mehreren Hanfgarnen unter den Bedingungen, daß die Hanfgarne dicht aneinandergefügt in Bandform gebracht sind.

## Revendications

1. Arbre flexible comprenant:
un arbre intérieur ayant un fil à noyau en acier (16) et des groupes d'éléments de fil (18,19,20,21) formés en adhérant de manière collante une pluralité d'éléments de fil en acier (18a,19a,20a,21a) en formes de bande enroulées en sens opposé les uns vers les autres autour le fil à noyau en acier (16), la pluralité de groupes de fil (18,19,20,21) étant formée en couches et en section concentrique,
charactérisé en ce qu'un lubrifiant est imprégné sous vide dans des espaces entre la pluralité d'éléments de fil en acier (18a,19a,20a,21a), à cause de cela le lubrifiant essentiellement entoure la périphérie dudit fil à noyau en acier (16) et chacun élément de fil en acier intérieur de la pluralité d'éléments de fil en acier (18a,19a,20a,21a), et ledit lubrifiant essentiellement rempli les espaces entre les éléments de fil en acier (18a,19a,20a,21a).

2. Arbre flexible selon la revendication 1, charactérisé en ce que au moins une couche portant de grasse (17) est installée entre le fil noyau (16) et le groupe d'éléments de fil (18) situé le plus intérieur ou entre les groupes d'éléments de fil (18,19,20,21).

3. Arbre flexible selon la revendication 2, charactérisé en ce que la couche portant de grasse (17) est formée en entourant le fil noyau avec plusieurs de fils de chanvre sous les conditions que les fils de chanvre sont façonnés de manière collante en forme de bande.
